(19) Europäisches Patentamt
European Patent Office
Office européen des brevets

(11) **EP 1 220 141 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*G06K 9/62* (2006.01)     *G06K 9/52* (2006.01)

(21) Anmeldenummer: **00127454.7**

(22) Anmeldetag: **14.12.2000**

(54) **Verfahren zur Erstellung von Referenzen sowie zum Vergleich von Fingerabdrücken**

Method for creating references and for comparing fingerprints

Procédé de génération de références et de comparaison d'empreintes digitales

(84) Benannte Vertragsstaaten:
**DE FR GB IT**

(43) Veröffentlichungstag der Anmeldung:
**03.07.2002 Patentblatt 2002/27**

(73) Patentinhaber: **Gigaset Communications GmbH**
**81379 München (DE)**

(72) Erfinder:
• **Birchbauer,Josef**
**A-8322 Studenzen (AT)**
• **Haselsteiner,Ernst**
**A-8010 Graz (AT)**
• **Heschgl,Kurt**
**A-8010 Graz (AT)**
• **Hribernig,Gerd**
**A-8046 Graz (AT)**
• **Leeb,Robert**
**A-4470 Enns (AT)**

• **Marius,Wolfgang Dr.**
**A-8043 Graz/Kroisbach (AT)**
• **Schwaighofer,Anton**
**A-8010 Graz (AT)**
• **Wachmann,Bernd**
**A-8181 St.Ruprecht (AT)**

(74) Vertreter: **Michalski Hüttermann & Partner**
**Patentanwälte**
**Neuer Zollhof 2**
**40221 Düsseldorf (DE)**

(56) Entgegenhaltungen:
**US-A- 5 465 308     US-A- 5 638 465**

• **BERFANGER D M ET AL: "All-digital ring-wedge detector applied to fingerprint recognition" APPLIED OPTICS, 10 JAN. 1999, OPT. SOC. AMERICA, USA, Bd. 38, Nr. 2, Seiten 357-369, XP002185550 ISSN: 0003-6935**

**Beschreibung**

Die Erfindung bezieht sich auf ein Verfahren zur Erstellung von Referenzen sowie zum Vergleich von Fingerabdrücken, bei welchem das Bild eines Fingerabdruckes durch eine zweidimensionale Fouriertransformation in den Frequenzbereich überführt wird, das Spektrum des Bildes in eine Anzahl sektor- und/oder ringförmiger Teilbereiche unterteilt, und über jeden dieser Teilbereiche integriert wird, und die daraus für die Teilbereiche erhaltenen Werte zu einem Merkmalsvektor zusammengefasst werden, wobei der Vergleich von Fingerabdrücken durch Vergleich von Merkmalsvektoren über eine Distanzberechnung erfolgt.

Neben der altbekannten Bedeutung des Fingerabdruckvergleichs in der Kriminalistik hat die Identifizierung von Fingerabdrücken auf elektronischer Basis auch auf anderen Gebieten erhebliche Bedeutung gewonnen, beispielsweise bei Kreditkarten- und Geldausgabeautomaten sowie bei der Zutrittskontrolle zu Gebäuden und Räumen, der Berechtigungskontrolle bei Computersystemen, Telekommunikationsgeräten, etc.

Üblicherweise werden aus einem Grauwertbild eines Fingerabdruckes, das beispielsweise mittels optischer Sensoren oder Ultraschallsensoren gewonnen wurde, die sogenannten Minutien herausgesucht. Es handelt sich dabei um Merkmale der Papillarlinien von besonderer Bedeutung, nämlich um Endpunkte, Verzweigungen, Inseln und andere singuläre Merkmale, wie z.B. in der WO 98/52149 (Siemens Aktiengesellschaft Österreich) näher erläutert. Das Bild des Fingerabdrucks kann in einem binären Pixelfeld dargestellt werden, und die Bildung einer Referenz bzw. der Vergleich zweier Fingerabdruckbilder erfolgt zwischen solchen binären Pixelfeldern. Das ist etwa in der EP 0 090 377 B1 (Fingermatrix Inc.) beschrieben oder - mit einem Vergleich unter Verwendung neuronaler Netze - in der bereits erwähnten WO 98/52149.

Es ist weiters bekannt geworden, zur Verringerung der anfällenden Datenmengen bzw. zur Beschleunigung des Vergleichs das Bild eines Fingerabdruckes einer zweidimensionalen Fouriertransformation zu unterwerfen und die Referenzbildung bzw. den Vergleich im Frequenzbereich durchzuführen. Ein derartiger Vergleich im Frequenzbereich ist z.B. in der DE 42 20 971 A1 (Chuo Hatsujo K.K.) beschrieben.

Die Unterteilung des Spektrums in Ringe und Sektoren zur Gewinnung von Merkmalsvektoren wurde von Coetzee, Louis and Botha, Elizabeth C. "Fingerprint Recognition in Low Quality Images", Pattern Recognition 26(10): 1441-1460, sowie von Berfanger, David M. and George, Nicholas: "All-Digital Ring-Wedge Detector Applied to Fingerprint Recognition", Applied Optics 38(2): 357-369, angegeben, und nähere Einzelheiten sind diesen Literaturstellen zu entnehmen. In dem letztgenannten Dokument wird auch ein neuronales Netz beschrieben, das mit mehreren Beispielmustern einer zu identifizierenden Person trainiert wird. Basierend auf dem trainierten neuronalen Netz kann der Fingerabdruck der Person identifiziert werden.

Mit Hilfe der solchermaßen gewonnenen Merkmalsvektoren bietet sich zwar eine sehr brauchbare Methode zum Vergleich von Fingerabdrücken, doch hat es sich gezeigt, dass die Wahl der Teilbereiche im Spektrum hinsichtlich ihrer Abmessungen, Lage und Anzahl kritisch ist, sodass sich für einen Vergleich oft lange Rechenzeiten ergeben, sofern entsprechende Anforderungen an seine Zuverlässigkeit gestellt werden.

In dem Dokument US 5,465,308 ist ein Mustererkennungsverfahren beschrieben, bei dem ein zweidimensionales Bild einer Fourier-Transformation unterzogen wird und in dem transformierten Bild basierend auf vorab ermittelten maximal unterscheidbaren Bereichen im Fourier-Raum entsprechende Merkmalsvektoren des Bildes bestimmt werden.

Eine Aufgabe der Erfindung liegt in der Schaffung eines Verfahrens, welches mit geringem Aufwand sehr zuverlässig und auch rasch die Erstellung einer Referenz bzw. den Vergleich der Bilder von Fingerabdrücken ermöglicht.

Diese Aufgabe wird durch der Gegenstand des Patentanspruchs 1 gelöst.

Die Erfindung schafft ein sehr flexibles Verfahren, welches äußerst rasch einen zuverlässigen Vergleich von Fingerabdrücken bzw. deren Bildern ermöglicht.

Eine weitere merkliche Qualitätssteigerung des Verfahrens ergibt sich, falls zur Distanzberechnung eine adaptive Distanzfunktion verwendet wird.

Eine Verbesserung der Sicherheit des Vergleichs lässt sich erzielen, falls als adaptive Distanzfunktion ein neuronales Netz zur Distanzberechnung herangezogen wird, welches über eine Menge an Beispielsvektoren mit gegebenem Abstand trainiert wird, wobei die Gewichte so gewählt werden, dass auf der Trainingsmenge die Abweichung zwischen dem gegebenen Abstand und dem vom neuronalen Netz berechneten Abstand minimal wird.

Bei einer einfach realisierbaren Variante ist vorgesehen, dass die Distanz zweier Merkmalsvektoren als euklidische Distanz berechnet wird.

Die Erfindung samt weiterer Vorteile ist im Folgenden anhand beispielsweiser Ausführungsformen näher erläutert, die unter Zuhilfenahme der Zeichnung veranschaulicht sind. In dieser zeigen:

- Fig. 1a und 1b ein Bild eines Fingerabdruckes und des zugehörigen Fourierspektrums,

- Fig. 2 eine beispielsweise Anordnung von Teilbereichen im Spektrum, und

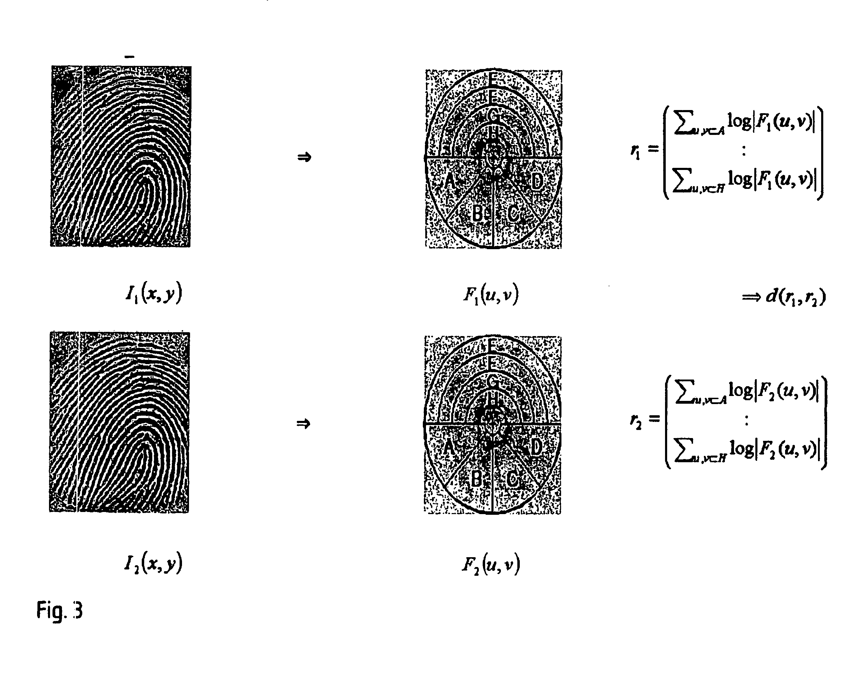

- Fig. 3 schematisch den Ablauf des erfindungsgemäßen Verfahrens ausgehend von den Bildern zweier Fingerabdrücke.

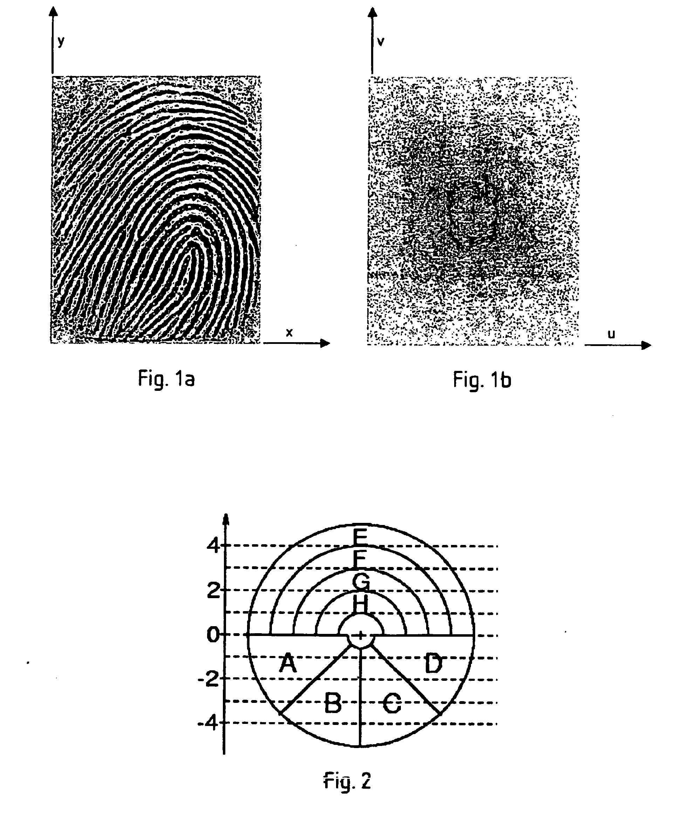

Gemäß Fig.1 wird das Bild eines Fingerabdruckes mit den Bildkoordinaten x, y (Fig. 1a) einer Fouriertransformation unterworfen, so dass man aus der Bildfunktion I (x, y) eine komplexe Funktion F (u, v) als Fourierspektrum erhält (Fig. 1b). Im vorliegenden Fall ist in Fig. lb nicht F (u, v), sondern log (1+|$F(u,v)$|) dargestellt, da sich so der hohe dynamische Bereich von |$F(u,v)$| besser verarbeiten lässt. Nähere Einzelheiten zur Fouriertransformation und ihren Eigenschaften, soweit hier von Interesse, sind beispielsweise in Gonzales, Rafael C. and Woods, Richard E. "Digital Image Processing". Addison-Wesley 1992,zu finden und müssen daher nicht weiter erörtert werden.

Unter der Annahme, dass das ursprüngliche Bild realwertig ist, ergibt sich ein konjugiert symmetrisches Spektrum, was bedeutet, dass z.B. in Fig. 16 die obere und die untere Hälfte des Spektrums spiegelsymmetrisch zueinander sind. Bei der in Fig. 2 gezeigten Gliederung des Spektrums in ringförmige und sektorförmige Bereiche verwendet man dementsprechend eine (obere) Hälfte für die (halb)ringförmigen Bereiche E, F, G, H und die andere (untere) Hälfte für die sektorförmigen Bereiche a, B, C, D. Die Gleichkomponente des Spektrums (Frequenz = 0) befindet sich bei der hier gewählten Darstellung im Zentrum.

Nun wird ein Merkmalsvektor r dadurch gebildet, dass über jeden der Bereiche A bis H das Spektrum F(u, v) bzw. |$F(u,v)$| über den Bereich integriert wird bzw. für alle Punkte des Spektrums, die in den entsprechenden Bereich fallen, |$F(u,v)$| summiert wird, so dass sich z.B. folgender Merkmalsvektor r ergibt:

$$r = \begin{pmatrix} \sum_{u,v \in A} |F(u,v)| \\ \vdots \\ \sum_{u,v \in H} |F(u,v)| \end{pmatrix}.$$

Im Hinblick auf den hohen Dynamikbereich der Elemente F(u,v) verwendet man zweckmäßigerweise den Logarithmus samt einer Skalierung, welche die unterschiedlichen Größen der Testbereiche berücksichtigt, wodurch sich der Merkmalsvektor darstellt als

$$r = \begin{pmatrix} \frac{1}{|A|} \sum_{u,v \in A} \log\left(1 + |F(u,v)|\right) \\ \frac{1}{|H|} \sum_{u,v \in H} \log\left(1 + |F(u,v)|\right) \end{pmatrix}$$

Es ist zu bemerken, dass gemäß Fig. 2 ein insgesamt kreisförmiger Bereich des Spektrums in Testbereiche unterteilt wird, was bei einem Seitenverhältnis von 1:1 auch zweckmäßig ist, da bei anderen Seitenverhältnissen von z.B. 1:2 ein elliptischer Bereich zu unterteilen ist, so dass die Ringbereiche E bis H nicht Kreisringe, sondern Ellipsenringe werden. Gleiches gilt sinngemäß für die Sektoren A bis D.

Der Vergleich eines Fingerabdruckes mit einem anderen bzw. mit einer Referenz erfolgt nun durch den Vergleich der jeweiligen Merkmalsvektoren auf Basis einer Distanzberechnung. Dabei berechnet eine Distanzfunktion aus zwei gegebenen Merkmalsvektoren ein Abstandsmaß, welches die Ähnlichkeit zwischen zwei Fingerabdrücken widerspiegelt. Zweckmäßig ist die Anwendung einer adaptiven Distanzfunktion, insbesondere unter Anwendung eines neuronalen Netzes.

Das Maß für die Ähnlichkeit der Bilder $I_1$, $I_2$ zweier Fingerabdrücke mit Merkmalsvektoren r1, r2 kann dann idealerweise zwischen 1 ($I_1$ und $I_2$ zeigen den selben Finger) und 0 liegen, d.h.

$$p(I_1, I_2) = p(r_1 r_2) \in [0,1]$$

Ein vernünftiger Ansatz, der auch die Kommutativität erhält, d.h. $p(r_1,r_2) = p(r_2,r_1)$ besteht darin, mit der Differenz der Merkmalsvektoren zu arbeiten, somit

$$p\left(I_1, I_2\right) = p\left(\left|r_1 - r_2\right|\right)$$

als Ausgangspunkt für den Ähnlichkeitsvergleich zu wählen. Wenn ein Satz von Fingerabdrücken $I_1 \ldots I_N$ vorliegt, kann man alle möglichen paarweisen Vergleiche als Trainingsbeispiele $\{x^{ij}\}$ mit Zielwerten $\{t^{i,j}\}$ berechnen:

$$x^{ij} = \left|r_i - r_j\right|$$
$$t^{ij} = \begin{cases} 1 & wenn \quad C(I_i) = C(I_j) \\ 0 & sonst \end{cases}$$
$$\forall_{ij} \in \{1 \ldots N\}, i \le j$$

Hier ist die Verwendung z.B. eines zweistufigen neuronalen Netzes sehr vorteilhaft. Die Abstandsberechnung kann dann wie folgt durchgeführt werden.

$$d = g\left(\sum_{j=1}^{M} w_{kj} f\left(\sum_{i=0}^{d} v_{ij} \left|r_i s_i\right|\right)\right)$$

Dabei sind

**w** die Gewichte in der 2. Schicht (Output-Schicht)
**v** die Gewichte in der 1. Schicht (Input-Schicht)
**g** die Aktivierungsfunktion in der 2. Schicht (wird fix gewählt)
**f** die Aktivierungsfunktion in der 1. Schicht (wird fix gewählt)
**M** die Anzahl der Neuronen in der 1. Schicht.

Das Trainieren eines solchen neuronalen Netzes als adaptive Abstandsfunktion erfolgt über eine Menge an Beispielsvektoren r, s mit gegebenem Abstand $\tilde{d}$. Die Gewichte w, v werden so gewählt, dass auf der Trainingsmenge die Abweichung von gewünschtem Abstand $\tilde{d}$ und vom Netz berechneten Abstand d minimal ist.

Bezüglich der Aufteilung des Spektrumbildes in Teilbereiche, nämlich Sektoren und (Halb)ringe, ist zu bemerken, dass diese Aufteilung empirisch erfolgen kann. Erfindungsgemäß wird jedoch ein Optimierungsverfahren angewendet, durch welches jene Parameter bestimmt werden, welche die Lage, Anzahl und Größe der Teilbereiche bestimmen.

Zur Optimierung der Parameter wird das Kriterium der Trennbarkeit von Klassen verwendet. Man kann den Vergleich von Fingerabdrücken als zwei-Klassen-Problem betrachten, bei welchem die Klasse $C_1$ Fingerabdrücke des selben Fingers repräsentiert, die Klasse $C_2$ Fingerabdrücke verschiedener Finger. Die Parameter müssen nun so gewählt werden, dass man die beiden Klassen am leichtesten unterscheiden kann.

Betrachtet man beide Klassen als Zufallsvariable, so kann man aus dem Bayes-Fehler ein Kriterium für die Klassen-Trennbarkeit ableiten. Eine ausführliche Einführung zu der Regel von Bayes findet sich in Bishop, Christopher M. "Neural Networks for Pattern Recognition", Oxford University Press 1995 und in Funkunaga, Keinosuke "Introduction to Statistical Pattern Recognition", Academic Press Inc. 1990.

Als Maßzahl für die Trennbarkeit beider Klassen kann mit Vorteil die sogenannte Bhattacharyya-Distanz herangezogen werden, die von der Annahme einer Gauss-Verteilung innerhalb der Klassen ausgeht. Ausgangspunkt des Bayes-Fehlers ist die Tatsache, dass zwei Klassen der hier in Frage kommenden Art einen Überlappungsbereich besitzen. Zwei Klassen mit niedrigem Bayes-Fehler lassen sich leicht trennen bzw. unterscheiden. Für den Bayes-Fehler gibt es eine obere Schranke, $\exp\left(-\mu\left(\dfrac{1}{2}\right)\right)$, die Bhattacharyya-Distanz ist der Ausdruck $\mu\left(\dfrac{1}{2}\right)$ in der oberen Schranke.

Beispielsweise Berechnungen haben gezeigt, dass $\mu\left(\frac{1}{2}\right)$ mit der Anzahl der Sektoren größer wird (und damit der Bayes-Fehler der beiden Klassen kleiner), dass die Anzahl der Ringe etwa doppelt so groß sein sollte, wie die Anzahl der Sektoren und dass eine Vergrößerung des Ringradius - gemessen in Pixel - ab etwa 50 Pixel kaum eine weitere Verkleinerung der Bhattacharyya-Distanz bringt. Als weiteres Beispiel sei genannt, dass sich bei 24 Teilbereichen sieben Sektoren und 17 Ringe als optimal erwiesen haben.

Die genannten Beispiele beruhen natürlich auf spezifischen Fingerabdruckbildern, wobei die Art der Gewinnung dieser Bilder ebenso Einfluss auf die optimalen Parameter haben kann, wie die Größe des verwendeten Ausschnittes aus einem Fingerabdruck.

### Patentansprüche

1. Verfahren zur Erstellung von Referenzen sowie zum Vergleich von Fingerabdrücken, bei welchem das Bild eines Fingerabdruckes durch eine zweidimensionale Fouriertransformation in den Frequenzbereich überführt wird, das Spektrum des Bildes in eine Anzahl sektor- und/oder ringförmiger Teilbereiche unterteilt, und über jeden dieser Teilbereiche integriert wird, und die daraus für die Teilbereiche erhaltenen Werte zu einem Merkmalsvektor zusammengefasst werden, wobei der Vergleich von Fingerabdrücken durch Vergleich von Merkmalsvektoren über eine Distanzberechnung erfolgt, wobei

   Parameter, welche die Lage, Anzahl und Größe der Teilbereiche bestimmen, mit Hilfe eines Optimierungsverfahrens ermittelt werden, in dem durch Differenzbildung einer Vielzahl von Merkmalsvektoren der Klasse identischer sowie der Klasse verschiedener Fingerabdrücke Vergleichsvektoren gebildet werden, eine Maßzahl für die Trennbarkeit beider Klassen ermittelt wird und die optimalen Parameter aus der Maximierung der Maßzahl für die Separierbarkeit bestimmt werden, **dadurch gekennzeichnet, dass** als Maßzahl für die Trennbarkeit die Bhattacharyya-Distanz der Vergleichsvektoren beider Klassen verwendet wird.

### Claims

1. Method for creating references and for comparing fingerprints, in the case of which method the image of a fingerprint is transferred into the frequency domain by a two-dimensional Fourier transformation, the spectrum of the image is subdivided into a number of sectorial and/or annular subregions and is integrated over each of these subregions, and the values obtained therefrom for the subregions are combined to form a feature vector, the comparison of fingerprints being performed by comparing feature vectors via a distance calculation, parameters which determine the position, number and size of the subregions being determined with the aid of an optimization method in which comparison vectors are formed by forming the difference of a multiplicity of feature vectors of the class of identical fingerprints and the class of different fingerprints, a numerical measure for the separability of the two classes being determined, and the optimum parameters being determined from the maximization of the numerical measure for the separability, **characterized in that** the Bhattacharyya distance of the comparison vectors of the two classes is used as numerical measure for the separability.

### Revendications

1. Procédé d'élaboration de références ainsi que de comparaison d'empreintes digitales, selon lequel est passée l'image d'une empreinte digitale dans le domaine fréquentiel par une transformation de Fourier bidimensionnelle, on divise le spectre de l'image en un certain nombre de sous-domaines en forme de secteurs et/ou d'anneaux, on effectue une intégration sur chacun de ces sous-domaines et on réunit les valeurs obtenues à partir de là pour les sous-domaines en un vecteur de caractéristiques, la comparaison d'empreintes digitales s'effectuant par comparaison de vecteurs de caractéristiques par un calcul de distance et des paramètres qui déterminent la position, le nombre et la dimension des sous-domaines étant obtenus à l'aide d'un procédé d'optimisation dans lequel on forme des vecteurs de comparaison par formation de différences de plusieurs vecteurs de caractéristiques de la classe empreintes digitales identiques ainsi que de la classe empreintes digitales différentes, on détermine une mesure pour la séparabilité des deux classes et on fixe les paramètres optimaux à partir de la maximisation de la mesure de séparabilité, **caractérisé en ce que** l'on utilise comme mesure de séparabilité la distance de Bhattacharyya des vecteurs de comparaison des deux classes.

Fig. 1a

Fig. 1b

Fig. 2

$$I_1(x,y) \Rightarrow F_1(u,v) \qquad r_1 = \begin{pmatrix} \sum_{u,v \subset A} \log|F_1(u,v)| \\ \vdots \\ \sum_{u,v \subset H} \log|F_1(u,v)| \end{pmatrix}$$

$$\Rightarrow d(r_1, r_2)$$

$$I_2(x,y) \Rightarrow F_2(u,v) \qquad r_2 = \begin{pmatrix} \sum_{u,v \subset A} \log|F_2(u,v)| \\ \vdots \\ \sum_{u,v \subset H} \log|F_2(u,v)| \end{pmatrix}$$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9852149 A
- EP 0090377 B1
- DE 4220971 A1
- US 5465308 A

**In der Beschreibung aufgeführte Nicht-Patentliteratur**

- **Coetzee, Louis ; Botha, Elizabeth C.** Fingerprint Recognition in Low Quality Images. *Pattern Recognition,* vol. 26 (10), 1441-1460
- **Berfanger, David M. ; George, Nicholas.** All-Digital Ring-Wedge Detector Applied to Fingerprint Recognition. *Applied Optics,* vol. 38 (2), 357-369
- **Bishop, Christopher M.** Neural Networks for Pattern Recognition. Oxford University Press, 1995
- **Funkunaga, Keinosuke.** Introduction to Statistical Pattern Recognition. Academic Press Inc, 1990